# EUROPEAN PATENT APPLICATION

(11) **EP 4 166 724 A1**
(43) Date of publication of application: **19.04.2023**
(21) Application number: 22202164.4
(22) Date of filing: 18.10.2022
(51) Int. Cl.: E02F 3/43, E02F 9/20, H02P 7/00, B60L 50/00

(54) **CONTROL METHOD AND SYSTEM FOR CONTROLLING AN ELECTRIC TRANSMISSION OF A WHEEL LOADER**

(30) Priority: 18.10.2021 IT 202100026666
(71) Applicant: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT); Venezia, Antonio, 10153 Torino (IT)
(74) Representative: CNH Industrial IP Department

(57) **Abstract**

Control method of an electric transmission of a mechanical bucket (CWL) equipped with an arm (B) and a bucket or bucket (T), the transmission including an electric motor (M) of propulsion, the method comprising, the acquisition of a value of a deflection (a) of an accelerator pedal (AccP), a first process of controlling the electric motor (M) so as to realize a speed control in closed cycle as a function of said deflection value, a second control process of the electric motor (M) so as to realize a torque control function of said deflection value, and wherein a switching from said first process to said second process is caused by the recognition of a digging operation.

## Description

### Field of the invention

The present invention relates to the field of electrified work vehicles, and in particular of the type comprising an electric motor connected to at least one vehicle wheel to allow the vehicle to move forward or backward.

### State of the art

The progressive technological development of battery power systems makes it possible to design electric work vehicles. The dynamic behavior of an electric vehicle is completely different from the behavior of a vehicle with a thermal engine equipped with a hydraulic transmission.

When propulsion is achieved by means of a thermal engine, the position of the accelerator pedal identifies a corresponding number of revolutions of the thermal engine and when the value of the resisting torque exceeds the maximum value of the engine torque, the latter is increased by the hydraulic transmission, through the increase of the displacement of the hydraulic motor and/or reduction of the displacement of the hydraulic pump.

However, the hydraulic transmission is designed so that the maximum torque never exceeds the vehicle's wheel slip limit value.

A vehicle with an electric motor, on the other hand, is characterized by the fact that a speed control strategy is implemented, which implies that the position of the accelerator pedal identifies a corresponding vehicle speed value and therefore it is possible to have a drive torque greater than the vehicle's wheel slip limit value.

This causes inconvenience to driving especially during the "digging" phase in which the bucket is inserted into a pile of material to be picked up.

The Anglo-Saxon term "digging" identifies this loading phase and does not have a corresponding term in Italian language. If not specifically excluded in the detailed description that follows, what is described in this chapter is to be considered as an integral part of the detailed description.

### Summary of the invention

The object of the present invention is to propose a method and system for controlling an electric transmission of a wheel loader.

The basic idea of the present invention is to carry out a speed control of the transmission in conditions of "normal movement of the vehicle" and to perform a torque control of the transmission in "digging" conditions.

Speed control implies that the position of the accelerator pedal identifies a corresponding vehicle speed value. A feedback control adapts the engine torque in order to achieve the target speed value, set by the deflection of the accelerator pedal.

Torque control means that a deflection of the accelerator pedal corresponds to a corresponding torque value, regardless of the vehicle speed.

Advantageously, the vehicle is much more manageable during the operations for inserting the bucket into a heap of material, preventing the vehicle wheels from slipping. Switching from speed control to torque control is commanded upon the simultaneous occurrence of a list of conditions listed below:
- The vehicle speed is below a first predetermined threshold,
- The variation in vehicle speed is below a predetermined threshold,
- The transmission is in forward gear,
- The hydraulic functions are active,
- The drive torque delivered by the electric motor exceeds a predetermined torque threshold,
- The variation of the torque delivered by the electric motor exceeds a predetermined variation threshold,
- An accelerator pedal deflection value exceeds a predetermined deflection threshold,
- The position of the arm is below a predetermined height,
- The position of the bucket or bucket is within a predetermined range of angles with respect to the arm.
When at least one of the following conditions is met, the system switches from torque control to speed control:
- Changeover of the transmission from forward to neutral or reverse;
- The vehicle speed exceeds a second predetermined threshold greater than the first.

According to a preferred embodiment of the invention, the transition from speed control to torque control is achieved by setting a torque value that varies linearly, in a predetermined time interval, between the last torque value set by the feedback control and the torque value corresponding to the deflection of the accelerator pedal. Subsequently, the calculated torque value is gradually forced to the value corresponding to the deflection of the accelerator pedal.

According to another preferred embodiment of the invention, the transition from torque control to speed control is achieved by setting a speed value which varies linearly, in a predetermined time interval, between the last speed value of the vehicle and the speed value corresponding to the deflection of the accelerator pedal. Subsequently, the calculated speed value is gradually forced to the value corresponding to the deflection of the accelerator pedal. The dependent claims describe preferred variants of the invention, forming an integral part of this description.

### Brief description of the figures

Further objects and advantages of the present invention will become clear from the following detailed description of an example of its embodiment (and its variants) and from the annexed drawings given purely for explanatory and non-limiting purposes, in which:
Figure 1 shows an example of a wheel loader implementing the present invention;
Figure 2 shows the electric transmission implementing the present invention.

The same reference numbers and letters in the figures identify the same elements or components or functions.

It should also be noted that the terms "first", "second", "third", "upper", "lower" and the like can be used as labels to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

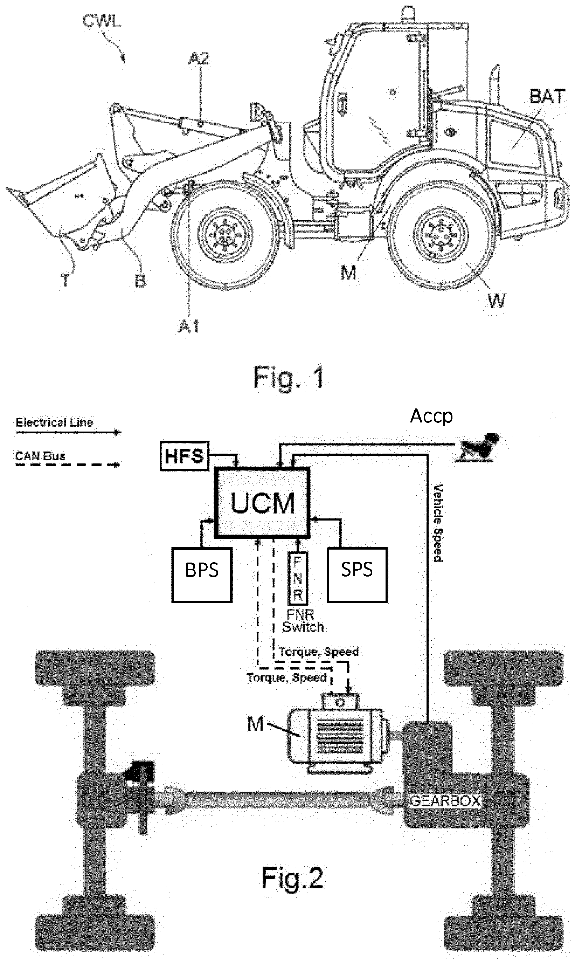

Figure 1 shows a CWL work vehicle, a wheel loader, with an arm B operated by the hydraulic actuator A1 and a bucket T, connected to the arm B and operated by the corresponding actuator A2.

The operation of the hydraulic actuators is subject to the activation of the "hydraulic functions". Without this activation, the hydraulic circuit that supplies the actuators A1 and A2 remains deactivated.

The vehicle CWL is equipped with a battery pack BAT and an electric motor M connected to the transmission and to at least one vehicle wheel W.

A processing unit UCM, schematized in Figure 2, is operationally connected with a plurality of sensors, including
- An accelerator pedal deflection sensor, which for convenience is indicated with the same accelerator pedal (AccP),
- A vehicle speed sensor, generally associated with the vehicular transmission,
- An arm position sensor "BPS", generally associated with actuator A1 arranged to move arm B,
- A bucket T position sensor "SPS", generally associated with the actuator A2 arranged to move the blade, to return a value of the angle that the bucket forms with the arm,
- A sensor "FNR Switch" associated with the forward, neutral or reverse gear selector lever,
- A torque sensor delivered by the electric motor M,
- A sensor for enabling the hydraulic functions "Hydraulic Function Switch" synthesized with the acronym HFS.

Since the arm and/or the bucket and possibly also further auxiliary members can be activated by means of an electro-hydraulic circuit, then, according to the present invention, a button or in any case a man-machine interface allows the electrical circuit to be enabled or disabled. -Hydraulic control of the arm and/or bucket. The HFS sensor allows to detect if the hydraulic functions, enslaved to the arm and/or bucket are active or inactive.

The torque sensor can be replaced by a model of the electric motor, which on the basis of supply voltages and currents is able to estimate the torque delivered.

The processing unit UCM is configured to control the electric motor based on the signals generated by the aforementioned sensors.

In particular, the processing unit is configured to perform a speed control or a torque control on the electric motor. When the unit performs a speed check, a deflection of the accelerator pedal corresponds to a target vehicle speed.

The deflection angle and vehicle speed are proportional to each other. So that, for example, at 10% of the deflection, with respect to a released condition, of the accelerator pedal, the vehicle speed is 10% of the rated speed. The proportionality can be linear or exponential. An exponential proportionality is advantageous for having greater control of the vehicle at low speed.

A feedback control ensures that the speed corresponding to the pedal position is reached by the vehicle, regardless of the resistance torque value that opposes the advancement of the vehicle. Thus, when climbing or descending, the vehicle advances at the same speed indicated by the deflection of the accelerator pedal.

When the control unit UCM performs a torque control on the electric motor, a deflection of the position of the accelerator lever indicates a corresponding torque that the electric motor M is called upon to deliver. Evidently, in such conditions, if a resisting torque opposes the advancement of the vehicle, the vehicle slows down, contrary to what happens when the speed is feedback controlled.

According to the present invention, a speed control is generally set, however, when a digging phase is recognized, the control switches to a torque control.

The digging phase is recognized when the following conditions occur simultaneously:
- a vehicle speed Vehicle Speed is below a first predetermined threshold Sth1,
- a variation of the vehicle speed DVS is below a predetermined threshold DVSth of variation of the vehicle speed,
- The transmission is in forward gear F = ON,
- The hydraulic functions are active HFS = ON,
- a value of driving torque T delivered by the electric motor exceeds a predetermined threshold of driving torque Tth,
- a variation of the driving torque DT delivered by the electric motor exceeds a predetermined threshold of variation of the driving torque DTth,
- a deflection value α of the accelerator pedal AccP exceeds a predetermined deflection threshold αth,
- a position h of the arm B is below a predetermined height hth,
- a position β of the bucket or bucket T is within a predetermined range of positions or angles βr with respect to the arm.

The conditions to be fulfilled to cause the aforementioned switching are therefore:
- Vehicle Speed < Sth1
- DVS < DVSth
- F = ON
- HFS = ON
- T> Tth
- DT> DTth
- α > αth
- h < hth
- β is within the interval βr

Conversely, the changeover from torque control to speed control is performed when it is recognized that the digging operation is ended. In particular, when at least one of the following conditions is met:
- F = OFF
- Vehicle Speed > Sth2, with Sth1 < Sth2.

According to a preferred variant of the invention, the transition from speed control to torque control is achieved by setting a torque value that varies linearly, in a predetermined time interval, between the last torque value set by the feedback control and the torque value corresponding to the deflection of the accelerator pedal. Subsequently, the calculated torque value is gradually forced to the value corresponding to the deflection of the accelerator pedal.

The last torque value set by the feedback control depends on the torque needed to make the vehicle reach a speed value corresponding to the accelerator pedal deflection value. According to another preferred variant of the invention which can be combined with the previous one, the transition from torque control to speed control is achieved by setting a speed value that varies linearly, in a predetermined time interval, between the last vehicle speed value and the speed value corresponding to the accelerator pedal deflection. Subsequently, the calculated speed value is gradually forced to the value corresponding to the deflection of the accelerator pedal.

The last speed value depends on the torque delivered by the electric motor, a function of the deflection value of the accelerator pedal, and on the resistant torque perceived by the electric motor.

The present invention can be advantageously carried out by means of a computer program, which comprises coding means for carrying out one or more steps of the method, when this program is executed on a computer. Therefore, it is intended that the scope of protection extends to said computer program and further to computer readable means comprising a recorded message, said computer readable means comprising program coding means for carrying out one or more steps of the method, when said program is run on a computer. Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details.

## Claims

1. Method for controlling an electric transmission arranged to operatively guide a wheel of a wheel loader (CWL) equipped with an arm (B) and a shovel or bucket (T), the transmission comprising an electric propulsion motor (M), the method comprising,
- acquisition of a value of a deflection (α) of an accelerator pedal (AccP),
- a first control process of the electric motor (M) so as to carry out a speed control in closed loop wherein a target speed value is a function of said deflection value,
- a second control process of the electric motor (M) so as to provide a torque control wherein a torque value is a function of said deflection value,
and wherein a switching from said first process to said second process is caused by the recognition of a digging operation.

2. Method according to claim 1, wherein said recognition of the digging operation is caused by the simultaneous detection of all the following conditions:
- a vehicle speed (Vehicle Speed) is below a first predetermined speed threshold (Sth1),
- a change in vehicle speed (DVS) is below a predetermined threshold (DVSth) for a change in vehicle speed,
- The transmission is in forward gear (F = ON),
- hydraulic functions relating to the operation of the arm and/or bucket are active (HFS = ON),
- an engine torque value (TK) delivered by the electric motor exceeds a predetermined engine torque threshold (Tth),
- a variation of the driving torque (DT) exceeds a predetermined threshold of variation of the driving torque (DTth),
- a deflection value (α) of the accelerator pedal (AccP) exceeds a predetermined deflection threshold (αth),
- a position (h) of the arm (B) is below a predetermined height (hth),
- a position (β) of the shovel or bucket (T) is within a predetermined range of angles (βr) with respect to the arm.

3. Method according to claim 2, wherein a switchover from said second process to said first process is caused when at least one of the following conditions is met:
- Transmission is in neutral or reverse (F = OFF)
- A vehicle speed value (Vehicle Speed) exceeds a second speed threshold (Sth2) greater than said first speed threshold (Sth1).

4. Method according to any one of the preceding claims 1 - 3, wherein said switching from the first to the second process is carried out by setting a torque value which varies linearly, in a predetermined time interval, between the last torque value set by the control in closed cycle and the torque value corresponding to the accelerator pedal deflection value.

5. Method according to any one of claims 3 or 4, wherein said switching from the second to the first process is carried out by setting a speed value which varies linearly, in a predetermined time interval, between the last speed value of the vehicle and a additional speed value corresponding to the accelerator pedal deflection value.

6. Computer program comprising program coding means adapted to carry out all the steps of any one of claims 1 to 5, when said program is run on a computer.

7. Computer readable means comprising a recorded program, said computer readable means comprising program coding means adapted to perform all steps of any one of claims 1 to 5, when said program is run on a computer.

8. Electrified wheel loader(CWL), equipped with
- an arm (B) and a shovel or bucket (T),
- a transmission comprising an electric propulsion motor (M), and of
- a control unit (UCM) configured to acquire a value of a deflection (α) of an accelerator pedal (AccP) and to control the electric propulsion motor (M) so as to realize a speed control in closed loop function of said deflection value and configured to control the electric motor (M) so as to provide a torque control function of said deflection value, as long as it recognizes a digging operation.

9. A vehicle according to claim 8, further comprising
- A deflection sensor (AccP) of the accelerator pedal,
- A vehicle speed sensor,
- A boom position sensor (BPS),
- A bucket position sensor ((SPS) of a bucket (T) with respect to the arm (B),
- A sensor associated with a forward, neutral or reverse gear selector lever "FNR Switch",
- A torque sensor for sensing a torque delivered by the electric motor (M),
- A sensor enabling a hydraulic function "Hydraulic Function Switch",
and wherein said sensors are operationally connected with said control unit (UCM) and wherein the processing unit is configured to recognize said digging operation when
- a vehicle speed (Vehicle Speed) is below a first predetermined threshold (Sth1),
- a change in vehicle speed (DVS) is below a predetermined threshold (DVSth) for a change in vehicle speed,
- The transmission is in forward gear (F = ON),
- The hydraulic functions are active (HFS = ON),
- an engine torque value (TK) delivered by the electric motor exceeds a predetermined engine torque threshold (Tth),
- a variation of the engine torque (DT) exceeding a predetermined threshold of variation of the engine torque (DTth),
- a deflection value (α) of the accelerator pedal (AP) exceeds a predetermined deflection threshold (αth),
- a position (h) of the arm (B) is below a predetermined height (hth),
- a position (β) of the shovel or bucket (T) is within a predetermined range of angles (βr) with respect to the arm.

10. Vehicle according to claim 8 or 9, wherein said control unit (UCM) is configured to control the electric motor (M) so as to realize a speed control in closed loop, wherein a target speed value is a function of said deflection value, and wherein the speed control in closed loop is triggered when at least one of the following conditions is verified:
- Transmission is in neutral or reverse (F = OFF)
- A vehicle speed value (Vehicle Speed) exceeds a second speed threshold (Sth2) greater than said first speed threshold (Sth1).
